# EUROPEAN PATENT SPECIFICATION

(11) **EP 0 338 126 B1**
(45) Date of publication and mention of the grant of the patent: **19.05.1993**
(21) Application number: 88120343.4
(22) Date of filing: 06.12.1988
(51) Int. Cl.: H04L 1/24, G01R 31/02

(54) **Method and apparatus for testing twisted-pair interconnections of a local area network**
Verfahren und Vorrichtung zur Prüfung von verdrillten Doppelleitungen in einem lokalen Netz
Méthode et appareil pour tester des câbles à paires torsadées d'un réseau local

(30) Priority: 22.04.1988 US 188771
(43) Date of publication of application: 25.10.1989
(73) Proprietor: Hewlett-Packard Company, Palo Alto, California 94304 (US)
(72) Inventor: Huang, Fred G., Folsom, CA 95630 (US)
(74) Representative: Liesegang, Roland, Dr.-Ing.

(56) References cited:
- EP-A- 0 026 135
- NASA TECH. BRIEFS, vol. 1, nr. 1, Spring 1976, pages 30-31, Washington, US; H. LOPEZ: "Remote access of modem by digital control"
- RESEARCH DISCLOSURE, nr. 256, August 1985, page 413, abstract nr. 25640, Emsworth, Hampshire, GB: "Easy wrap test"

## Description

Co-pending applications of particular interest to the instant application are U.S. Ser. No. 084,960 (published as EP-A-0 303 407) filed August 13, 1987 on behalf of Fred G. Huang entitled "Crosstalk Reduction in Unshielded Twisted-Pair Lines", U.S. Ser. No. 084,961 (published as EP-A-0 303 410) filed August 13, 1987 on behalf of Fred G. Huang entitled "Non-Linear Squelch Circuit for IEEE-892.3 Protocol".

### FIELD OF THE INVENTION

The present invention relates to local area network communication circuitry and, more particularly, to a method and apparatus for testing premises twisted-pair telephone wiring for suitability in a high-speed local area network.

### BACKGROUND OF THE INVENTION

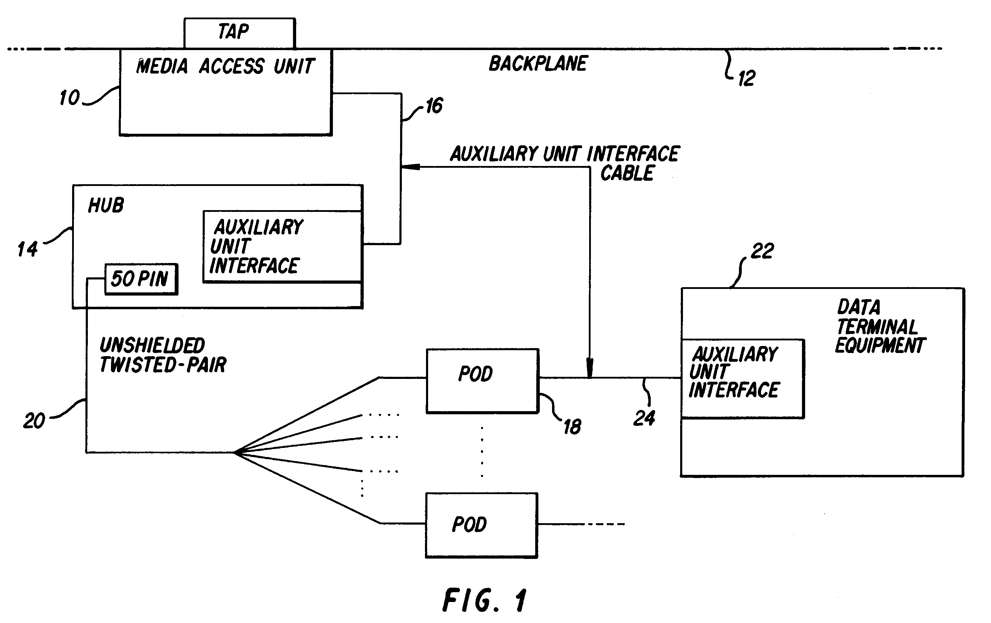

Fig. 1 illustrates a high-speed local area network (LAN) interconnected by individual unshielded twisted-pair (TP) wires. Related, co-pending application entitled "Crosstalk Reduction in Unshielded Twisted-Pair Lines" contains a description of the use of unshielded TP wires in an IEEE 802.3 LAN allowing transmission speeds of 10 million bits per second (mbps) by employing collision protocol and two different drive levels to reduce crosstalk. Such description is incorporated herein by reference.

Each Pod of the LAN shown in Fig. 1 preferably employs a non-linear squelch circuit described in the related, co-pending application entitled "Non-Linear Squelch Circuit for IEEE 802.3 Protocol" and such description is incorporated herein by reference. The squelch circuit avoids false activation of the receiver within the Pod.

The LAN shown in Fig. 1 preferably uses ordinary TP wires such as exist in premises wiring of telephones in office buildings. In this way, expensive and disruptive installation of shielded coaxial cable to interconnect electronic equipment in a LAN is avoided. Standard telephone test equipment can perform tests to determine that there are no shorts or open circuits so that the premises wiring is "useable" for basic telephone needs. Since the high-speed LAN so provided is inexpensive and convenient, it is desirable to test the usable premises telephone wiring in an inexpensive and convenient manner to assure its suitability for use in a high-speed LAN.

Known in the prior art are cable testers which require two skilled technicians and specialized equipment to test for high frequency characteristic needs of high speed network. Normally at one end, a number of cables, such as 25, all originate while the other end of each cable terminates at a remote location within the building. This requires time-consuming identification of the location where each cable terminates and then the positioning of a technician at each end of a cable for testing. Such testing is inconvenient, expensive and partially defeats the purpose of using ordinary TP premises wiring.

What is needed is a convenient inexpensive way of testing existing premises telephone wiring for high speed network and can be performed by a single unskilled person without the need to trace each cable and find the location where it terminates.

### SUMMARY OF THE INVENTION

A method of testing existing premises telephone wiring for its suitability in a LAN using unshielded TP wires is provided which can be performed quickly and conveniently by an unskilled person. There is no need to trace each wire pair to locate its termination because the method operates on open lines. A tester is utilized which is connected, in turn, to each pair of TP wires and a test is automatically performed on that pair. The operator simply connects the tester to each pair at its origin, leaving the other end open. A simple visual indication, such as a green light or a red light, will be given by the tester to show whether this pair passed the test.

The tester is, as far as the operator is concerned, a "black box" and his or her understanding of its internal construction is unnecessary. Since the tester is normally needed only once, at the initial installation of the LAN, it need not be purchased, but can be loaned for the particular one-time use, thereby avoiding purchase of a relatively costly device.

The tester generates a predetermined stream of digital data signals and transmits them onto all twisted-pair wires to which it is connected. Because the far end of these TP wires is open, the transmitted data signals are reflected back to the near end, if the TP wire is satisfactory for use in a high-speed LAN. (That is, without stubs, mismatches,...etc.) Attenuation of the reflected signal will occur, but will be compensated by a receiver portion of the transceiver.

The directional coupler will cause the attenuated reflected signal from a partial twisted-pair to be received by the transceiver. This received signal can then be compared against the transmitted signal and if the former is simply an attenuated copy of the latter, the particular TP wires are satisfactory for use in the high-speed LAN of Fig. 1.

In practice, the bit error rate (BER) of the received signal must be less than a predetermined value for the TP wire to be "good".

### BRIEF DESCRIPTION OF THE DRAWINGS

Fig. 1 is a block diagram showing a Hub-Pod configuration of a LAN employing TP wires.

Fig. 2 illustrates the use of a cable tester employed in testing the TP wires of the LAN.

Fig. 3 is a block diagram of the cable-tester device of the instant invention.

### DETAILED DESCRIPTION OF THE PREFERRED EMBODIMENT

With reference to Fig. 1, a typical installation of a local area network (LAN) having a STAR topology will be used to describe the instant invention. The various elements shown in Fig. 1 are described in detail in the related, co-pending application "Crosstalk Reduction in Unshielded Twisted-Pair Lines" and such description is incorporated by reference herein. A set of unshielded twisted-pair (TP) ordinary telephone lines 20 interconnect a Hub 14 and a set of twenty-five Pods 18. Preferably, the lines 20 are pre-existing premises wiring in a building. And it is desired to test their suitability for use in the high-speed LAN of Fig. 1.

The twenty-five TP lines 20 originate at a 50-pin connecter which plugs into the Hub 14. The individual TP lines then run to various locations within the building to connect a Pod 18 to the Hub.

A test of these twenty-five pairs 20 is performed in accordance with the instant invention by isolating the twenty-five TP wires 20, i.e., disconnecting the 50-pin plug from Hub 14 and leaving open the TP wires where they terminate and would normally connect to a Pod 18. In other words, the TP wires 20 are tested as they are normally found in a building without any equipment connected at either end.

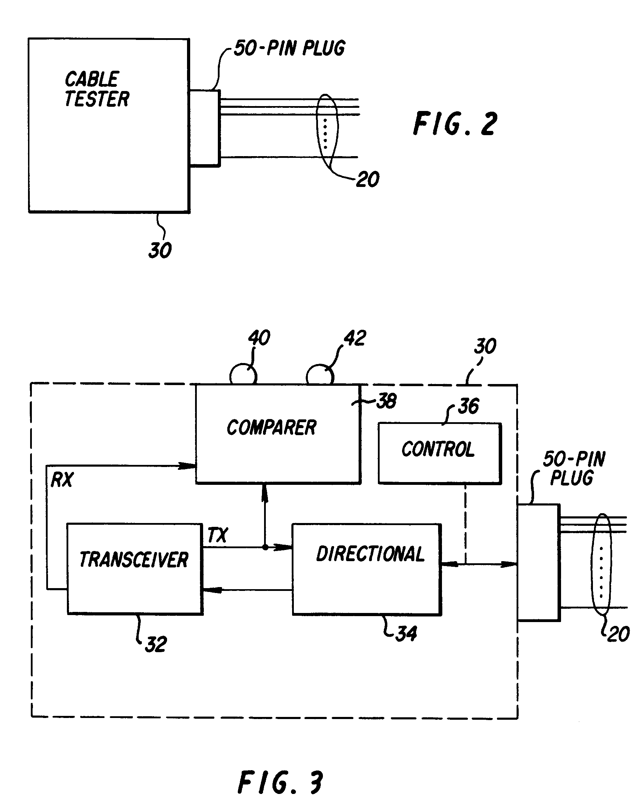

With reference now to Fig. 2, a cable tester 30 constructed in accordance with the instant invention, as will be described hereinbelow, is connected to the 50-pin plug at which the twenty-five pairs of TP wires originate.

The cable tester 30 then generates a predetermined sequence of digital signals over all twenty-five TP wires 20. Since the far ends of all TP wires are open, the signals are reflected back to the cable tester. The cable tester 30 includes a directional coupler which can be selectively connected to one pair of the TP wires 20. In turn, each pair of the twenty-five TP wires 20 is connected to the receiver portion of the tester 30 via the directional coupler. Because the directional coupler causes the receiver section of the transceiver to receive only the reflected signal on this particular TP, the bit error rate (BER) in the reflected signal may be calculated from the transmitted signal. If the BER is below a predetermined level, the particular TP is considered satisfactory for use in the LAN. That is, it has no "stubs" nor mismatches.

The cable-tester 30 then is set to test the next TP wire, in turn, the sense that the directional coupler causes the receiver section of the transceiver to receive only the reflected signal on this next TP. In this manner, all twenty-five TP 20 can be tested in sequence.

In a preferred embodiment of the cable-tester 30, each test of a particular TP will take less than one second. So the overall test of all twenty-five TP wires will consume less than one minute.

The cable-tester 30 is preferably constructed as shown in block diagram of Fig. 3. A transmitter section of a transceiver portion 32 of cable-tester 30 is capable of generating a 10 million bit per second (mbps) sequence of signals (TX). These signals are conducted via a directional coupler 34 to all twenty-five TP wires 20 which are connected to cable-tester 30 via the 50-pin plug. A control block 36 can selectively connect the coupler 34 to one of the twenty-five TP wires. The reflected signal received on the selected TP wires is conducted via directional coupler 34 to the receiver section of transceiver 32. The receiver section then generates the received signal (RX) which is conducted to a comparer block 38. The TX signal generated by the transmitter portion of transceiver 32 is also conducted to comparer 38. Comparer 38 generates a visual indication at one of two light-emitting diodes (red) 40 and (green) 42 whether the particular TP wire is good. This evaluation is based on the BER of the received signal (RX).

Control 36 can then select the next TP wire for testing until all twenty-five pairs are tested. All blocks of cable-tester 30, other than directional coupler 34, are conventional and will not be described herein.

## Claims

1. A method of testing unshielded twisted-pair, TP, wires (20) for suitability in interconnecting elements of a high-speed local area network, LAN, each said TP wire having an open near end and a open far end, **characterized** by the steps:
a) transmitting at a predetermined bit rate a predetermined sequence of digital signals onto said near end of one of said TP wires;
b) receiving at said near end of said one TP wire a sequence of digital signals reflected from said far end;
c) comparing the sequence transmitted at step (a) and the sequence received at step (b); and
d) indicating suitability of said one TP wire if the comparison at step (c) resulted in a bit error rate, BER, less than a predetermined value, and indicating unsuitability otherwise.

2. A method according to claim 1, **characterized** in that steps (a), (b), (c) and (d) are performed selectively for each of said TP wires in said LAN, wherein step (a) calls for transmitting said predetermined signal sequence onto said near end of all said TP wires in said LAN and, wherein step (b) calls for receiving said reflected signal sequence from said selected one of said TP wires.

3. Apparatus for testing unshielded twisted-pair, TP, wires (20) for suitability in interconnecting elements of a high-speed local area network, LAN, each said TP wire having an open near end and an open far end, said apparatus implementing the TP wire-testing method of claim 2, **characterized** in that it comprises transceiver means (32) having a transmitter portion for generating and transmitting a predetermined sequence of digital signals onto said open near end of said TP wire and having a receiver portion for receiving a sequence of digital signals reflected from said far end of said TP wire and for generating therefrom a sequence of received signals;
directional coupler means (34) connected to said transceiver means (32) and selectively coupled to said TP wire (20) to be tested for conducting from said transmitter portion said generated sequence of digital signals to said TP wire (20) and for conducting said reflected digital signals to said receiver portion;
comparer means (38) responsive to said signals generated by said transmitted portion and responsive to said received signals generated by said receiver portion for generating a signal indicative of whether the bit error rate BER is less than a predetermined value of not,
control means (36) connected to said directional coupler means (34) for selectively coupling said TP wire (20) to said directional coupler (34); and
indication means (40,42) responsive to said signal generated by said comparer means (38) for generating a sensory indicative of said suitability of said TP wire.

## Patentansprüche

1. Verfahren zum Prüfen ungeschirmter, verdrillter Doppel-Leitungen (TP-Leitungen) (20) auf deren Brauchbarkeit in Verbindungselementen eines lokalen Hochgeschwindigkeits-Netzes, LAN, wobei jede TP-Leitung ein offenes nahes Ende und ein offenes fernes Ende aufweist, dadurch **gekennzeichnet,** daß
a) mit einer vorgegebenen Bitrate eine vorgegebene Folge digitaler Signale zum nahen Ende einer der TP-Leitungen gesendet wird,
b) am nahen Ende dieser einen TP-Leitung eine vom fernen Ende reflektierte Folge digitaler Signale empfangen wird,
c) die im Schritt a) gesendete Folge mit der im Schritt b) empfangenen Folge verglichen wird, und
d) die Brauchbarkeit der einen TP-Leitung angezeigt wird, wenn sich beim Vergleich im Schritt c) eine Bitfehlerrate, BER, ergibt, die geringer als ein vorgegebener Wert ist, und andernfalls die Unbrauchbarkeit angezeigt wird.

2. Verfahren nach Anspruch 1, dadurch **gekennnzeichnet,** daß die Schritte a), b), c) und d) wahlweise für jede der TP-Leitungen in dem LAN durchgeführt werden, wobei der Schritt a) das Senden der vorgegebenen Signalfolge zum nahen Ende aller der TP-Leitungen in dem LAN erfordert und der Schritt b) das Empfangen der reflektierten Signalfolge von der ausgewählten TP-Leitung erfordert.

3. Vorrichtung zum Prüfen ungeschirmter, verdrillter Doppel-Leitungen (TP-Leitungen) (20) auf deren Brauchbarkeit in Verbindungselementen von lokalen Hochgeschwindigkeits-Netzen, LAN, wobei jede der TP-Leitungen ein offenes nahes Ende und ein offenes fernes Ende aufweist und wobei die Vorrichtung das Verfahren zum Prüfen der TP-Leitungen von Anspruch 2 implementiert, **gekennzeichnet** durch
eine Sender-Empfänger-Vorrichtung (32) mit einem Senderbereich zum Erzeugen und Senden einer vorgegebenen Folge digitaler Signale zum offenen nahen Ende der TP-Leitung und mit einem Empfängerbereich zum Empfangen einer Folge digitaler Signale, die von dem fernen Ende der TP-Leitung reflektiert wird, und zum Erzeugen einer Folge empfangener Signale daraus,
eine Richtungskoppler-Vorrichtung (34), die mit der Sender-Empfänger-Vorrichtung (32) verbunden und wahlweise mit der zu prüfenden TP-Leitung (20) gekoppelt ist, um die erzeugte Folge digitaler Signale vom Senderbereich zur TP-Leitung (20) zu leiten und um die reflektierten digitalen Signale zum Empfängerbereich zu leiten,
eine Vergleichervorrichtung (38), die auf die vom Senderbereich erzeugten Signale und auf die vom Empfängerbereich erzeugten Signale anspricht, um ein Signal zu erzeugen, das angibt, ob die Bitfehlerrate, BER, kleiner ist als ein vorgegebener Wert oder nicht,
eine Steuervorrichtung (36), die mit der Richtungskoppler-Vorrichtung (34) verbunden ist, um wahlweise die TP-Leitung (20) mit dem Richtungskoppler (34) zu verbinden, und
eine Anzeigevorrichtung (40, 42), die auf das von der Vergleicher-Vorrichtung (38) erzeugte Signal anspricht, um eine sensorische Angabe der Brauchbarkeit der TP-Leitung zu erzeugen.

## Revendications

1. Procédé de contrôle de fils à paires torsadées TP non-blindées (20) pour sa conformité à l'interconnexion d'éléments d'un réseau local à grande vitesse LAN, chacun desdits fils TP ayant une extrémité ouverte proche et une extrémité ouverte distante, caractérisé par les étapes de:
a) transmission à une vitesse prédéterminée des bits d'une séquence prédéterminée de signaux numériques sur ladite extrémité proche de l'un desdits fils TP;
b) réception sur ladite extrémité proche dudit fil TP d'une séquence de signaux numériques réfléchis depuis ladite extrémité distante;
c) comparaison de la séquence transmise à l'étape (a) avec la séquence reçus à l'étape (b); et
d) indication de la conformité dudit fil TP si la comparaison effectuée à l'étape (c) a pour résultat un taux d'erreurs sur les bits BER, inférieur à une valeur prédéterminée, et indication de la non-conformité dans le cas contraire.

2. Procédé selon la revendication 1, caractérisé en ce que les étapes (a), (b), (c), et (d) sont effectuées de façon sélective pour chacun desdits fils TP dans ledit LAN, dans lequel l'étape (a) exige la transmission de ladite séquence de signal prédéterminé sur ladite extrémité proche de tous lesdits fils TP dans ledit LAN et, dans lequel l'étape (b) exige la réception de ladite séquence de signal réfléchi dudit fil choisi desdits fils TP.

3. Appareil de contrôle de fils à paires torsadées TP non-blindés (20) pour leur conformité à l'interconnexion d'éléments d'un réseau local à grande vitesse LAN, chacun desdits fils TP ayant une extrémité ouverte proche et une extrémité ouverte distante, ledit appareil réalisant le procédé de contrôle des fils TP de la revendication 2, caractérisé en ce qu'il comporte un dispositif émetteur-récepteur (32) possédant une partie émetteur destinée à générer et à transmettre une séquence prédéterminée de signaux numériques sur ladite extrémité proche dudit fil TP et possédant une partie récepteur destinée à recevoir une séquence de signaux numériques réfléchis depuis ladite extrémité distante dudit fil TP et destinée à générer de là une séquence de signaux reçus;
un dispositif coupleur directif (34) relié audit dispositif émetteur-récepteur (32) et couplé de façon sélective audit fil TP (20) à contrôler destiné à amener depuis ladite partie émetteur ladite séquence de signaux numériques générée audit fil TP (20) et destiné à amener lesdits signaux numériques réfléchis à ladite partie récepteur;
un dispositif comparateur (38) sensible auxdits signaux générés par ladite partie émetteur et sensible auxdits signaux reçus générés par ladite partie récepteur destiné à générer un signal indiquant si le taux d'erreurs sur les bits BER est inférieur à une valeur prédéterminée ou pas,
un dispositif de contrôle (36) relié audit dispositif coupleur directif (34) destiné à coupler de façon sélective ledit fil TP (20) audit coupleur directif (34); et
un dispositif indicateur (40, 42) sensible audit signal généré par ledit dispositif comparateur (38) destiné à générer une indication sensorielle de la conformité dudit fil TP.
